# EUROPEAN PATENT SPECIFICATION

(11) **EP 4 672 163 B1**
(45) Date of publication and mention of the grant of the patent: **09.09.2026**
(21) Application number: 24184425.7
(22) Date of filing: 25.06.2024
(51) Int. Cl.: G06V 20/56, G06V 10/10, G06V 20/50, G06V 20/70

(54) **A METHOD AND PROCESSING DEVICE FOR PROVIDING A SCENE SEGMENTATION MAP**
VERFAHREN UND VERARBEITUNGSVORRICHTUNG ZUR BEREITSTELLUNG EINER SZENENSEGMENTIERUNGSKARTE
PROCÉDÉ ET DISPOSITIF DE TRAITEMENT POUR FOURNIR UNE CARTE DE SEGMENTATION DE SCÈNE

(43) Date of publication of application: 31.12.2025
(73) Proprietor: Axis AB, 223 69 Lund (SE)
(72) Inventor: Murstam, Mikael, 223 69 LUND (SE); Yuan, Song, 223 69 LUND (SE)
(74) Representative: AWA Sweden AB

(56) References cited:
- US-A1- 2013 021 433
- US-A1- 2018 160 025
- BOSCH JOSEP ET AL: "Omnidirectional Multicamera Video Stitching Using Depth Maps", IEEE JOURNAL OF OCEANIC ENGINEERING, IEEE SERVICE CENTER, PISCATAWAY, NJ, US, vol. 45, no. 4, 1 October 2020 (2020-10-01), pages 1337 - 1352, XP011814865, ISSN: 0364-9059, [retrieved on 20201012], DOI: 10.1109/JOE.2019.2924276

## Description

### Technical field

The present invention relates to the field of imaging and analyzing images acquired by an image capturing device. In particular, the present invention relates to providing a scene segmentation map for video images.

### Background

In the realm of image processing, scene segmentation is a widely adopted technique for analyzing visual content, often employed in applications like forensics. Object segmentation is a form of scene segmentation, determining the object classes of image pixels with a specified confidence level. By dividing an image, for example a video image, into distinct regions representing various object classes, such as people, trees, houses, and skies, object segmentation can offer valuable insights. Additionally, depth segmentation can be performed to ascertain depth regions of an image, assigning depth values to individual pixels of the image. Combining various segmentation techniques yields a comprehensive scene segmentation map, offering enriched information that can be used by subsequent image processing algorithms, such as privacy masking (object masking) or video compression. For example: US 2018/160025 A1, which discloses a multi-camera system in which correspondence points are defined within a monitored environment and focus values are stored for the correspondence points. During operation, focus settings for cameras are automatically determined based on camera position and previously stored focus values; and US 2013/021433, discloses a method for generating a panoramic overview image by stitching together images acquired during movement of a pan-tilt-zoom camera.

Segmentation processes can be performed by neural networks. For example, a neural network can be trained to perform the task of object segmentation for images that are input to the network. The output from the network may in that case be a list of confidence scores for predetermined object classes, that the network is trained to identify, for different pixels in the image. Correspondingly, the task of depth segmentation can be performed by a neural network that is trained to take an image as input and provide depth values for pixels of the image as output. **It** is also conceivable to provide multiple segmentation results as output from a single network, for example both object classes with confidence values and depth values on a pixel level or pixel group level, provided that the neural network is trained for this purpose.

Non-limiting examples of neural network models that can be employed for the purpose of segmentation includes PSPNet (for semantic segmentation) and Mask R-CNN (for panoptic segmentation).

However, image segmentation is a processing demanding task which poses a substantial limitation when the image segmentation is performed within a camera device, i.e., using the processing capabilities of a camera device. A further limitation when performing image segmentation on the edge, i.e., within the camera device, is during live video streaming where video images need to be analyzed in real time before transmitting the video stream. Hence, there is a need for processing efficient methods for executing image segmentation, for example for updating a scene segmentation map, both in general and for the purpose of processing on the edge.

### Summary of the invention

An aim of the present invention is to provide a method of providing a scene segmentation map that is kept updated in a processing-efficient manner. Another aim of the present invention is to provide such a method that is suitable to be performed by an image capturing device adapted for live video transmission.

The invention is defined by the appended claims.

According to a first aspect, the above and other objects are achieved, in full or at least in part, by a **method** of providing a scene segmentation map for a total field of view of an image capturing device. The method comprises:
- obtaining a scene segmentation map for the total field of view that is determined by performing an image analysis algorithm on images acquired by the image capturing device, wherein the scene segmentation map indicates scene characteristics of static objects in object areas in the total field of view,
- receiving an indication that a new focus value has been set for the image capturing device for acquiring images of a current field of view, wherein the current field of view is equal to or less than the total field of view,
- comparing the new focus value with a stored focus value associated with a focus region in the current field of view, wherein the stored focus value represents a focus value previously set for acquiring images including the focus region,
- upon the new focus value deviating from the stored focus value more than a trigger threshold, triggering a segmentation update process comprising:
   ∘ obtaining one or more images acquired by the image capturing device,
   ∘ performing the image analysis algorithm on the one or more obtained images, and
   ∘ aligning the scene segmentation map to the output from the image analysis algorithm,
- upon the new focus value not deviating from the stored focus value more than the trigger threshold, maintaining the scene segmentation map.

As used herein "scene segmentation map" means a collection of data indicating scene characteristics of static objects in object areas in a field of view for an image capturing device. By static object is meant an object that, in contrast to a moving object, is stationary in the scene as depicted by the image capturing device. An object can be defined as being static by, for example, being still for at least a predefined time period. Some object types, such as buildings and trees, are typically permanently static, while other object types, such as movable articles or even living creatures, can change between a static and a moving object state. By scene characteristics is meant features that are represented in a depicted scene, for example object characteristics including object classes, colors, size, and depth. By "object area" is meant a region in a depicted image of the field of view that according to the segmentation represented by the scene segmentation map belongs to a same object.

As used herein "current field of view" means what the image capturing device is or was currently viewing at a particular moment in time, e.g., when acquiring images. As used herein "total field of view" means what the image capturing device is able to view using any movement capabilities it is provided with. For a fixed camera that is not able to perform mechanical movement to reach different fields of view, the total field of view is equal to the current field of view. Accordingly, the current field of view is equal to or smaller than the total field of view.

The scene segmentation map indicates scene characteristics of static objects. This type of scene segmentation map may be referred to as a background segmentation map, since static objects typically belong to a background image area while moving objects typically belong to a foreground image area. A scene segmentation map with static objects may be useful for analytics applications such as privacy (object) masking, compression algorithms and overlay generation. The scene segmentation map may also provide useful input to prioritization in analytics applications, for example which region(s) in an image that should be prioritized by an analytics application.

In one embodiment, parts of the image analysis algorithm are performed sequentially to further increase the efficiency of the method. The scene segmentation map may for example indicate scene characteristics of static objects comprising object classes and depth values. The sequential execution of a first part and a second part of the image analysis algorithm is especially advantageous in case the second part is adapted to perform depth estimation for determining depth values, since depth estimation is particularly processing demanding. The segmentation update process of the method may in this embodiment further comprise:
- obtaining one or more images acquired by the image capturing device,
- performing a **first part** of the image analysis algorithm on the one or more obtained images to determine new object classes for object areas,
- comparing the new object classes with current object classes for the object areas, and
- upon one or more new object classes being different from the current object classes, performing a **second part** of the image analysis algorithm on the one or more obtained images to determine new depth values for the object areas of the different new object classes, and
- aligning the scene segmentation map to the new object classes and any new depth values for the object areas.

In some embodiments, the method further comprises a step of determining that the new focus value is maintained for a plurality of consecutive images, before the new focus value is compared with a stored focus value. In this way, the scene segmentation map update process is not triggered based on focus change due to a moving object, for example a person moving through the scene. This type of object, i.e., moving objects, are not interesting to include in the scene segmentation map, the purpose of which is to represent static objects.

In case the image capturing device has movement capabilities, being for example a PTZ camera or being an image capturing device attached to a pan-tilt mount, the step may further comprise evaluating whether the consecutive images have been captured by the image capturing device when being in the same position and trigger the scene segmentation map update only in that case.

According to a second aspect, the above and other objects are achieved, in full or at least in part, by a processing device for providing a scene segmentation map for a total field of view of an image capturing device. The processing device is arranged to:
- obtain a scene segmentation map for the total field of view that is determined by performing an image analysis algorithm on images acquired by the image capturing device, wherein the scene segmentation map indicates scene characteristics of static objects in object areas in the total field of view,
- receive an indication that a new focus value has been set for the image capturing device for acquiring images of a current field of view, wherein the current field of view is equal to or less than the total field of view,
- compare the new focus value with a stored focus value associated with a focus region in the current field of view, wherein the stored focus value represents a focus value previously set for acquiring images including the focus region,
- upon the new focus value deviating from the stored focus value more than a trigger threshold, trigger a segmentation update process wherein the **pro**cessing device is further arranged to:
   ∘ obtain one or more images acquired by the image capturing device,
   ∘perform the image analysis algorithm on the one or more obtained images, and
   ∘ align the scene segmentation map to the output from the image analysis algorithm,
- upon the new focus value not deviating from the stored focus value more than the trigger threshold, maintain the scene segmentation map.

The processing device of the second aspect may generally be embodied in the same ways as the method of the first aspect with accompanying advantages.

The processing device may be part of a camera device, more specifically a camera device adapted for surveillance or monitoring of indoor or outdoor scenes. The camera device may be arranged with movement capabilities, either by internal components such as pan, tilt or zoom actuator(s) or by external components such as a camera mount for providing pan and tilt movement, also known as a camera positioning unit, for example units of AXIS T99A Positioning Unit Series.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description. It must be noted that, as used in the specification and the appended claim, the articles "a", "an", "the", and "said" are intended to mean that there are one or more of the elements unless the context clearly dictates otherwise.

### Brief description of the drawings

The invention will now be described in more detail by way of example and with reference to the accompanying schematic drawings, in which:
Fig. 1 illustrates a current field of view and a total field of view for an image capturing device,
Fig. 2 illustrates a plurality of focus regions in a total field of view for the image capturing device,
Fig. 3 is a flow chart of the method according to an embodiment,
Fig. 4a-4b illustrate image capturing devices and their components according to different embodiments, and
Fig. 5 illustrates parts of an image analysis algorithm according to an embodiment.

### Detailed description of embodiments

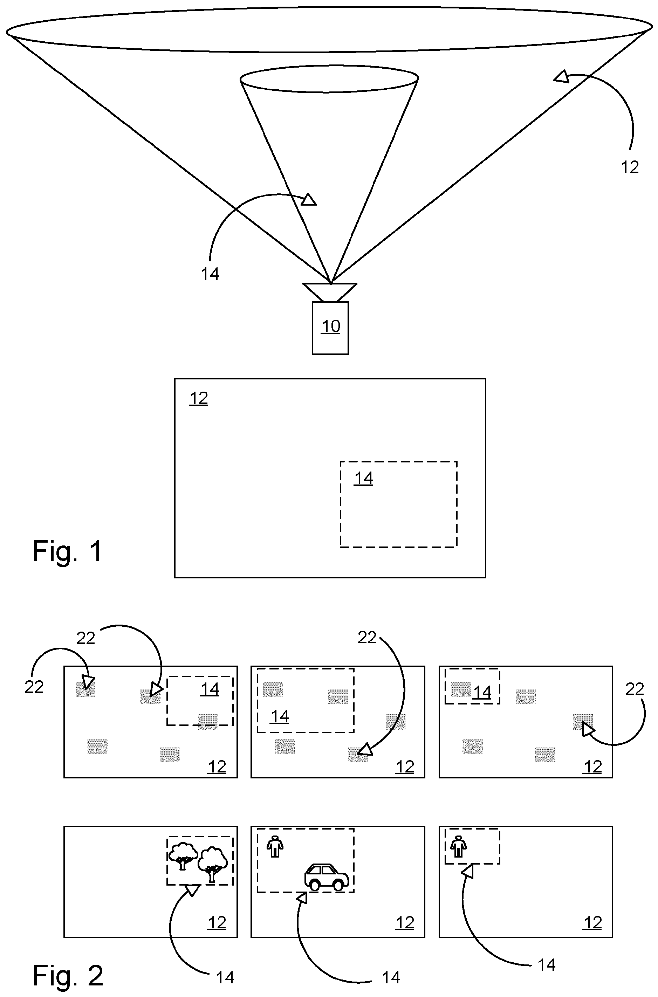

Fig. 1 illustrates an image capturing device 10 that will be used for describing preferred embodiment of the invention. The image capturing device 10 may also be known as a camera device and may be adapted for monitoring or surveillance purposes. A general function of the image capturing device 10 is to acquire images by an image sensor, process and encode the acquired images, and transmit the encoded image to a receiver such as a recorder, server, client or other camera depending on the configuration of a system that the image capturing device 10 is part of. The image capturing device 10 in the disclosed embodiments is provided with mechanical movement capabilities, meaning that the image capturing device 10 is able to perform mechanical pan, tilt and/or zoom movement. Pan and tilt movement may be implemented by an actuator that controls physical movement of the image capturing device 10. Zoom movement is controlled by mechanically adjusting optics of the image capturing device 10. The movement capabilities enable the image capturing device 10 to view a larger area of a scene and acquire images depicting different parts of the larger area compared to a fixed camera device having corresponding imaging characteristics but not provided with movement capabilities. In the context of this application, the larger area of the scene that the image capturing device 10 can reach using its movement capabilities is called "total field of view", denoted by 12 in Fig. 1, and the area that the image capturing device 10 is currently viewing is called "current field of view", denoted by 14 in Fig. 1.

Even though the preferred embodiments are described in view of the image capturing device 10 having movement capabilities, fixed image capturing devices (i.e. lacking movement capabilities) are not excluded. In the case of a non-moving image capturing device, the total field of view 12 is equal to the current field of view 14. Image capturing device having movement capabilities in part, for example only mechanical zoom and not pan/tilt movement capabilities, are also included within the scope of this application. Accordingly, for any embodiment, the current field of view 14 is equal to or smaller than the total field of view 12.

The embodiments disclosed herein rely on the use of stored focus values for one or more focus regions in the total field of view. Fig. 2 illustrates a plurality of focus regions 22 positioned in the total field of view 12 for the image capturing device 10. The current field of view 14 for three positions for the image capturing device 10 is also illustrated and objects depicted within each current field of view 14. Each focus region 22 is associated with a focus value for the image capturing device 10. A focus value indicates a setting of the image capturing device 10, typically in the optics module, to achieve a particular focus. The setting may for example define positions of elements within a lens assembly of the optics module or a distance between the lens assembly and an image sensor of the image capturing device 10 for achieving the desired focus. A focus value is associated with a focus region by finding a suitable focus setting for an image acquired by the image capturing device 10 when having a current field of view including the focus region. A focus value representing the suitable focus setting is converted into a focus value and stored in a focus value database together with an indication of the focus region's position, for example by image coordinates indicating a pixel or a pixel group. The position of the focus region may be selected to be a center part of the current field of view, or a part representing a suitable static object such as a house, tree, or wall. A known purpose of the stored focus values is to quickly find a suitable focus when the image capturing device 10 changes a current field of view, as disclosed in patent document JPH04367175. The stored focus values will be used also for other purposes in embodiments of the invention.

Besides the feature of acquiring and transmitting video, the image capturing device 10 also has features for analytic purposes. For example, the image capturing device 10 processes acquired images to detect motion, objects, or other events for the purpose of scene understanding. This information may be used internally in the camera, for example for improving encoding, or may be added as metadata to the transmitted video data. A scene segmentation map is one example of analytics data generated for the purpose of scene understanding. In the context of this application, a *scene segmentation map* means a collection of data that indicates scene characteristics of static objects in object areas in the total field of view 12. The image capturing device 10 analyzes acquired images to detect image features, such as objects, colors, depth, in the image which are stored as scene characteristics in the scene segmentation map. The term object should be interpreted broadly and include all types of scene content such as vehicles, buildings, plants and trees, sky regions, and road regions. Different objects belong to different object areas which may form an overlapping region in an image. The detected image features and their locations are stored together and form the scene segmentation map. Such a scene segmentation map can be used for performing other types of analytics, for example privacy masking, i.e., to change the appearance of the image or add a mask to an object area, or compression, for example to vary the compression level between object areas depending on the characteristics of static objects in the object areas. The scene segmentation map can also be useful for prioritization in analytic processes, for example which object areas that should be prioritized over other object areas.

The disclosed embodiments relate to a scene segmentation map which represents detected objects and their location in the total field of view, and represents depth values for different areas of the total field of view. The generation of a data set representing detected objects (and their location) and the generation of a data set representing depth values may be performed by a single or separate processes. Further, the data sets may be stored as separate data sets with a mutual association, together forming a data collection representing the scene segmentation map.

Specifically, the scene segmentation map of the disclosed embodiments represents static objects of the scene. The scene segmentation map for static objects, i.e. background objects, is heavy to update and the effect of optimizing processing for keeping the scene segmentation map updated is therefore higher in these embodiments.

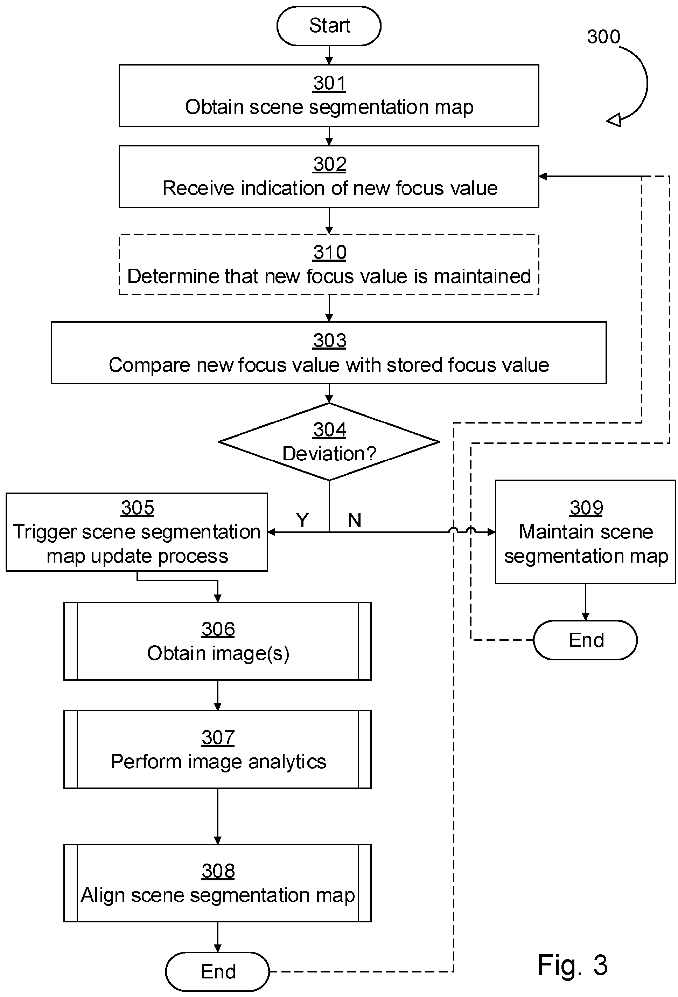

To accommodate to scene changes, the scene segmentation map needs to be kept updated. One way to accomplish this is to generate a new scene segmentation map on a regular basis. However, this is a waste of valuable processing resources in case there have not been any, or only a few, changes in the scene. Another way is to trigger a generation of a new scene segmentation map when motion is detected in the scene, since motion is an indication of a scene change. However, there is still a considerable risk of unnecessary processing since the motion may be caused by a temporary object in the scene, for example a moving vehicle, which causes an update of the scene segmentation map to adapt to an object that will not remain in the scene. Embodiments of the present invention disclose an improved method of providing a scene segmentation map which is based on the concept of triggering a scene segmentation process by a focus change of the image processing device 10 in view of a previously stored focus value. An embodiment of the method will now be disclosed with reference to Fig. 3. The method 300 may be performed by a processing device for providing a scene segmentation map located within or external to the image capturing device 10.

The method 300 of Fig. 3 begins with a step of obtaining 301 a scene segmentation map. The scene segmentation map may be generated from scratch by determining scene characteristics from image analysis of acquired images and collecting the determined data. The scene characteristics relates to characteristics of static objects, determined by an object detector, and calculated or estimated depth values. Depth values may be determined by image analysis of acquired images. As an alternative to generating the scene segmentation map from scratch, a stored scene segmentation map may be retrieved from a data storage. The stored scene segmentation map may be a current version of the scene segmentation map that is used by analytic processes within the image capturing device 10.

The method 300 comprises a step of receiving 302 an indication of a new focus value. The indication may be received 302 from a focus controller of the image capturing device 10. The focus controller may be arranged to determine and execute focus settings in the image capturing device 10. A focus value may be determined by a contrast-based focus algorithm which analyzes acquired images for determining a suitable focus setting. A focus setting is represented by a focus value. Different focus settings of the image capturing device 10 correspond to different focus values. In other words, by receiving 302 an indication that a new focus value has been set corresponds to receiving an indication that the focus setting of the image capturing device 10 has changed. The change can be a result of a change in position from a first current field of view to a second current field of view.

The new focus value is compared 303 with a stored focus value which represents a focus value that has been used for acquiring images of a field of view that at least partly overlaps the current field of view 14 for the image capturing device 10. The stored focus value may be associated with a focus region 22 as described with reference to Fig. 2. For this purpose, the method 300 may comprise identifying a focus region 22 in the current field of view 14 and retrieving a stored focus value associated with the identified focus region 22. In case a current field of view 14 covers a plurality of focus regions 22, as in the center image of Fig. 2, a selection of a focus region 22 according to a selection criterion may be applied. The selection criterion may define a prioritization among focus regions 22 or that a prioritization based on the positions of the focus regions 22, for example that the focus region 22 located closest to a center point of the current field of view 14 should be selected or that focus regions 22 of predetermined region of interests are selected before focus regions 22 outside these regions.

Next, it is determined 304 whether the new focus value deviates from the stored focus value. For example, the new focus value is compared with the stored focus value and if an absolute difference value is equal to or more than a threshold value, it is determined that the new focus value deviates from the stored focus value. It is here assumed that the skilled person can adapt the details of the comparison according to the format of the focus values such that the outcome of the comparison indicates whether the focus settings of the image capturing device 10 has changed more than a preset amount or level.

If there is a deviation between the new focus value and the stored focus value, it is assumed that there has been a scene change and an update of the scene segmentation map can be useful for the analytic processes. For this reason, a deviation above the threshold is followed by a step of triggering 305 a segmentation map update process. The purpose of the scene segmentation map update process is to make sure that the scene segmentation map reflects the current scene characteristics of static objects in the scene. For this purpose, the scene segmentation map update process comprises the steps of obtaining 306 images, performing 307 image analytics and aligning 308 the scene segmentation map. The image capturing device 10 may be instructed to acquire images for the analysis, or recently acquired images captured with the focus settings of the new focus value are retrieved. The image analytics is performed by an image analysis algorithm that is adapted to determine scene characteristics of the types included in the scene segmentation map. Based on the output from the image analysis algorithm, the scene segmentation map is aligned to represent the current scene characteristics. The aligning may comprise replacing scene characteristics in the scene segmentation map with output from the image analysis algorithm. The aligning may further comprise extending the scene segmentation map by adding scene characteristics for static objects in object areas in the total field of view that have not yet been represented in the scene segmentation map. In some embodiments, the aligning may comprise performing the replacement or addition of scene characteristics on condition that it is deemed necessary or meaningful. Once aligned, the scene segmentation map may be stored within the image capturing device 10 for being available to analytic processes using it.

In case the comparison between the new focus value and the stored focus value concludes that there is no substantial deviation, i.e. that the new focus value does not deviate more than the threshold from the stored focus value, the scene segmentation map update process is not triggered. In other words, the method 300 comprises a step of maintaining 309 the scene segmentation map for this outcome of the comparison.

When a round of the method 300 has been performed by the processing device, the processing device enters a waiting mode until another indication of a new focus value is received 302.

Hence, embodiments of the present invention disclose to trigger an update process for aligning the scene segmentation map when the focus setting of the image capturing device 10 is changed and differs a substantial amount from a previously used focus setting for depicting the same scene area. Using a (substantial) focus change as condition for the scene segmentation map update process, provides an advantage of determining new scene characteristics only when it is likely that there has been a change in the static appearance of the scene. If there is a need for focus change relative to a previous focus value for an object area, this is an indication that a depth, i.e., a distance between the object area and the image capturing device 10, has changed which means that one or more scene characteristics may also have changed. For some scene characteristics, for example depth values, a change in focus is an absolute indication that the scene characteristics have changed and should therefore be updated. For other scene characteristics, such as detected objects, the change in focus can be seen as an indicator that the scene characteristics have likely changed and needs to be updated. In both cases, the focus change as condition for when to trigger an update of the scene characteristics provide a well-balanced update of the scene segmentation map where the map is kept updated to an affordable processing cost.

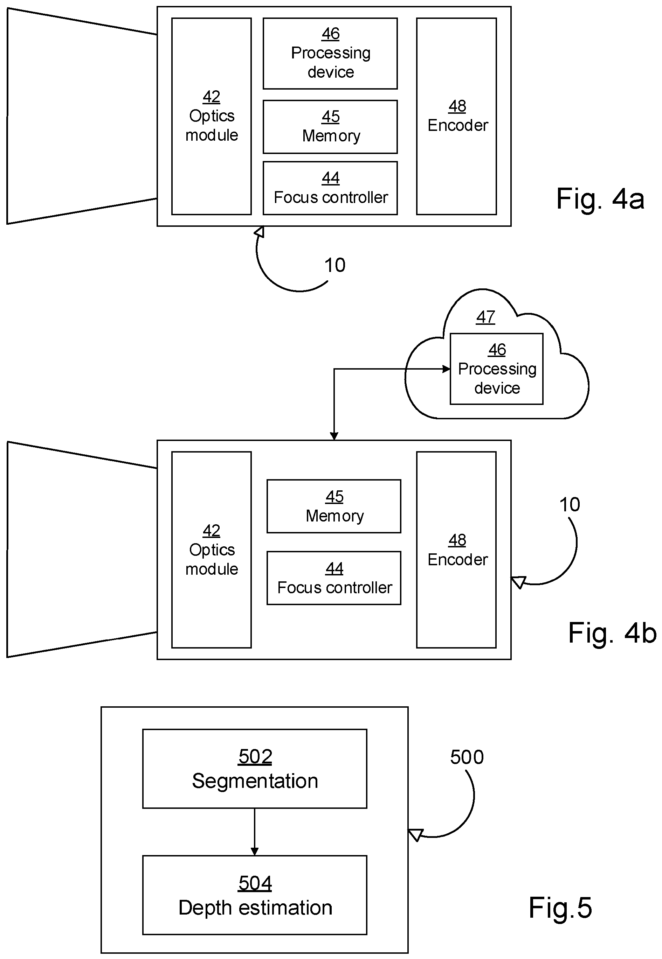

Going more into details of the scene segmentation map update process, an embodiment will now be disclosed with reference to Fig. 5. One step of the update process is the image analysis which is performed by an image analysis algorithm 500. The image analysis algorithm 500 is an algorithm adapted for determining scene characteristics of the scene segmentation map by image analysis. Parts of the image analysis algorithm 500 may be implemented by one or more neural networks trained for the purpose of detecting the scene characteristics in images. Since neural networks are typically processing demanding to run, the methods disclosed herein are particularly beneficial for implementations where at least a part of the analysis algorithm 500 are implemented by a neural network.

The image analysis algorithm 500 is in this embodiment divided into two parts: a first part 502 adapted for object segmentation and a second part 504 adapted for depth estimation. The first part 502 and the second part 504 may be executed as different processes, for example by different neural network implementations. In this embodiment, the first part 502 and the second part 504 are executed sequentially. In addition, the second part 504 is executed conditionally in view of the outcome from the first part 502. An advantage of this embodiment is that the second part 504 of the image analysis algorithm 500 doesn't need to be executed if the outcome of the first part 502 indicates that no changes in scene characteristics are present.

Going more into detail of this embodiment, the first part 502 performs object detection to determine object classes for object areas in one or more obtained images. The obtained images represent the current field of view for the image capturing device. The outcome of the first part 502 is new object classes for object areas. The new object classes are compared with current object classes for the object areas as indicated by the current scene segmentation map. If one or more new object classes are different from the current object classes, the second part 504 of depth estimation is triggered. If the new object classes are the same as the current object classes, there is no need for updating the depth values since it is likely that the objects in the object areas maintain the same depth values. In this outcome, the aligning of the scene segmentation map comprises concluding that the current object classes are still valid and that the scene segmentation map is up to date. This can be indicated by a time stamp included in the data collection of the scene segmentation map that indicates the time of latest review, i.e., the most recent time at which the scene characteristics of the scene segmentation were up to date. The time stamps can be set on an object area level, i.e., each object area has a time stamp which indicates when the object area was last aligned, or on a data collection level where all object areas share the same time stamp.

In case the new object classes differ from the current object classes, the second part 504 is performed to determine new depth values for the object areas. The second part 504 may be adapted to generate new depth values only for the object areas in which new object classes differ from current object classes to improve the processing efficiency even further. The aligning of the scene segmentation map comprises comparing the new depth values with the current depth values of the same object areas. For each object area where the new depth value is not the same as the current depth value, the object area is updated by replacing the current depth value with the new depth value. In addition, the second part 504 may be adapted to generate new depth values only for predetermined object classes. The predetermined object classes may correspond to interesting object classes, for example from a forensic perspective, such as vehicles and humans.

The sequential execution of the first part 502 and the second part 504 of the image analysis algorithm 500 is especially advantageous in case the second part 504 is adapted to perform depth estimation. Depth estimation is particularly processing demanding, thus there is a particular benefit of being able to run the depth estimation only in case there is a need for updating the depth values of the scene segmentation map.

In general, since a change in focus indicates a change in depth for one or more objects in the scene, it is an advantage of controlling the scene segmentation map update process in view of the focus change as disclosed herein in case the image algorithm comprises a depth estimation. The depth estimation can thus be triggered in a precise manner with a low amount of unnecessary execution of depth estimation that requires heavy processing.

In another embodiment, improved processing resource utilization may be achieved by a modification of the method 300. In this embodiment, the method further comprises a step of determining 310 that the new focus value is maintained for a plurality of consecutive images, before the new focus value is compared with a stored focus value. By maintained is here meant that the focus values for the consecutive images do not deviate from each other more than a preset margin. In this way, the scene segmentation map update process is not triggered based on a focus change due to a moving object, for example a person moving through the scene. This type of object, i.e., moving objects, are not interesting to include in the scene segmentation map, the purpose of which is to represent static objects. In case the image capturing device 10 has movement capabilities, being for example a PTZ camera or being an image capturing device attached to a positioning unit providing pan/tilt movement capabilities, the step 310 may further comprise evaluating whether the consecutive images have been taken by the image capturing device when being in the same position and trigger the scene segmentation map update only in that case. If the consecutive images have been taken by the image capturing device when being in different positions, the focus change may be consistent in case the image capturing device 10 is moved to follow an object. In other words, in case the image capturing device 10 is set to track an object by movement and focus on that object, it could appear that the focus change is remaining for a consecutive number of images. However, it is still not interesting to trigger the scene segmentation map update since the object is in fact in movement and is likely to move out of the scene shortly, and therefore the extra condition of checking whether the images have been acquired by the image capturing device 10 when being in the same position is useful.

Figs. 4a and 4b illustrate different embodiments of how a processing device 46 can be implemented for providing the functionality of the method 300 or any other embodiment of the claimed method. In Fig. 4a, the processing device 46 is part of the image capturing device 10. The processing device 46 may for example be a module in a system-on-chip component of the image capturing device 10. The image capturing device 10 further comprises conventional components such as an optics module 42 (comprising e.g., an image sensor and lens module), a focus controller 44 (for determining and executing changes in focus settings), a memory 45, and an encoder 48. The encoder 48 may be adapted to perform video encoding according to known video compression codecs, such as H.265, H.265, AV1, and different variants of MPEG video compression. The image capturing device 10 may be adapted to acquire, encode, and transmit video live without delay, also known as real time streaming or live streaming. Embodiments of the present invention may be particularly beneficial when performed in an image capturing device 10 during live streaming since acquired images need to be processed in real time by limited processing resources. To achieve a better utilization of available processing resources and focus them on tasks that are meaningful, as achieved by the disclosed method, is thus an advantage.

Fig. 4b illustrates an alternative embodiment where the processing device 46 is located remotely to the image capturing device 10, in this embodiment in a cloud server 47. In this embodiment, the processing device 46 receives an indication of a new focus value from the image capturing device 10, more specifically the focus controller 44. The scene segmentation map may be stored in the cloud server 47 or in the image capturing device 10, for example in the memory 45. The processing device 46 obtains the scene segmentation map and performs the scene segmentation map update process if the condition for triggering the process is fulfilled. This embodiment may be beneficial in that the processing device 46 of the cloud server 47 may unload the processing capabilities in the image capturing device 10.

The functionality of the processing device 46 may be implemented in hardware, software, or a combination of both. Put differently, the functionality of the processing device 46 and other elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The principles of the present invention will now be summarized. The purpose of the present invention is to provide a trigger mechanism for triggering a scene segmentation map update process which align current scene characteristics of the scene segmentation map to new scene characteristics as determined by an image algorithm, thereby bringing the scene segmentation map up to date. The novel trigger mechanism is based on focus change. In particular, if a focus setting of the image capturing device is set for a current field of view which is different from a previously used focus setting, the scene segmentation map update process is triggered. Otherwise, it is deemed that the scene segmentation map does not need to be updated. Variants of the inventive concepts includes evaluating further conditions for triggering the scene segmentation map update process. Methods of embodiment disclosed herein may be performed by a processing device located within an image capturing device or located externally, such as in a cloud server being connected via a network to the image capturing device.

## Claims

1. A method of providing a scene segmentation map for a total field of view of an image capturing device (10), the method comprising:
obtaining (301) a scene segmentation map for the total field of view (12) that is determined by performing an image analysis algorithm (500) on images acquired by the image capturing device (10), wherein the scene segmentation map indicates scene characteristics of static objects in object areas in the total field of view (12),
receiving (302) an indication that a new focus value has been set for the image capturing device (10) for acquiring images of a current field of view (14), wherein the current field of view (14) is equal to or less than the total field of view (12), wherein the new focus value indicates a setting of the image capturing device (10) to achieve a particular focus,
comparing (303) the new focus value with a stored focus value associated with a focus region (22) in the current field of view (14), wherein the stored focus value indicates a setting of the image capturing device (10) to achieve a focus previously used for acquiring images of a field of view that at least partly overlaps the current field of view (14),
upon the new focus value deviating from the stored focus value more than a trigger threshold, triggering (305) a segmentation update process comprising:
obtaining (306) one or more images acquired by the image capturing device (10),
performing (307) the image analysis algorithm (500) on the one or more obtained images to determine new scene characteristics, and
aligning (308) the scene segmentation map to represent the new scene characteristics, by replacing current scene characteristics with the new scene characteristics, by adding the new scene characteristics to extend the scene segmentation map, or by concluding that the current scene characteristics are the same as the new scene characteristics
upon the new focus value not deviating from the stored focus value more than the trigger threshold, maintaining (309) the scene segmentation map.

2. The method according to claim 1, wherein the scene segmentation map indicates scene characteristics comprising depth values.

3. The method according to any one of claims 1-2, wherein the scene segmentation map indicates scene characteristics comprising object classes and depth values, and wherein the segmentation update process comprises:
obtaining one or more images acquired by the image capturing device (10),
performing a first part (502) of the image analysis algorithm (500) on the one or more obtained images to determine new object classes for object areas,
comparing the new object classes with current object classes for the object areas,
upon one or more new object classes being different from the current object classes, performing a second part (504) of the image analysis algorithm (500) on the one or more obtained images to determine new depth values for the object areas of the different new object classes, and
aligning the scene segmentation map to the new object classes and any new depth values for the object areas.

4. The method according to any one of claims 1-3, wherein the image analysis algorithm (500) is implemented by one or more neural networks trained for the purpose of detecting scene characteristics in images.

5. The method according to any one of claims 1-4, further comprising determining (310) that the new focus value is maintained for a plurality of consecutive images.

6. The method according to claim 5, wherein the plurality of consecutive image frames is acquired by the image capturing device (10) when being in a same position.

7. A non-transitory computer-readable storage medium having stored thereon instructions for implementing the method according to any one of claims 1-6 when executed on a device having processing capabilities.

8. A processing device (46) for providing a scene segmentation map for a total field of view (12) of an image capturing device (10), the processing device (46) being arranged to:
obtain (301) a scene segmentation map for the total field of view (12) that is determined by performing an image analysis algorithm (500) on images acquired by the image capturing device (10), wherein the scene segmentation map indicates scene characteristics of static objects in object areas in the total field of view (12),
receive (302) an indication that a new focus value has been set for the image capturing device (10) for acquiring images of a current field of view (14), wherein the current field of view (14) is equal to or less than the total field of view (12), wherein the new focus value indicates a setting of the image capturing device (10) to achieve a particular focus,
compare (303) the new focus value with a stored focus value associated with a focus region (22) in the current field of view (14), wherein the stored focus value indicates a setting of the image capturing device (10) to achieve a focus previously used for acquiring images of a field of view that at least partly overlaps the current field of view (14)),
upon the new focus value deviating from the stored focus value more than a trigger threshold, trigger a segmentation update process wherein the processing device (46) is further arranged to:
obtain (306) one or more images acquired by the image capturing device,
perform (307) the image analysis algorithm (500) on the one or more obtained images to determine new scene characteristics, and
align (308) the scene segmentation map to represent the new scene characteristics, by replacing current scene characteristics with the new scene characteristics, by adding the new scene characteristics to extend the scene segmentation map, or by concluding that the current scene characteristics are the same as the new scene characteristics;
upon the new focus value not deviating from the stored focus value more than the trigger threshold, maintain (309) the scene segmentation map.

9. The processing device (46) according to claim 8, being further arranged to determine (310) that the new focus value is maintained for a plurality of consecutive images.

10. The processing device (46) according to claim 9, wherein the plurality of consecutive image frames is acquired by the image capturing device (10) when being in a same position.

11. An image capturing device (10) comprising the processing device (46) according to any one of claims 8-10.

12. The image capturing device (10) according to claim 11 arranged with movement capabilities.

## Patentansprüche

1. Verfahren zum Bereitstellen einer Szenensegmentierungskarte für ein gesamtes Sichtfeld einer Bilderfassungsvorrichtung (10), wobei das Verfahren Folgendes umfasst:
Erhalten (301) einer Szenensegmentierungskarte für das gesamte Sichtfeld (12), die durch Durchführen eines Bildanalysealgorithmus (500) an Bildern bestimmt wird, die durch die Bilderfassungsvorrichtung (10) erfasst werden, wobei die Szenensegmentierungskarte Szeneneigenschaften statischer Objekte in Objektbereichen in dem gesamten Sichtfeld (12) angibt,
Empfangen (302) einer Angabe, dass ein neuer Fokuswert für die Bildaufnahmevorrichtung (10) zum Erfassen von Bildern eines aktuellen Sichtfelds (14) eingestellt wurde, wobei das aktuelle Sichtfeld (14) kleiner oder gleich dem gesamten Sichtfeld (12) ist, wobei der neue Fokuswert eine Einstellung der Bildaufnahmevorrichtung (10) angibt, um einen bestimmten Fokus zu erreichen,
Vergleichen (303) des neuen Fokuswerts mit einem gespeicherten Fokuswert, der einem Fokusbereich (22) in dem aktuellen Sichtfeld (14) zugeordnet ist, wobei der gespeicherte Fokuswert eine Einstellung der Bildaufnahmevorrichtung (10) angibt, um einen Fokus zu erreichen, der zuvor zum Erfassen von Bildern eines Sichtfelds verwendet wurde, das das aktuelle Sichtfeld (14) zumindest teilweise überlappt,
sobald der neue Fokuswert von dem gespeicherten Fokuswert um mehr als eine Auslöseschwelle abweicht, Auslösen (305) eines Segmentierungsaktualisierungsprozesses, der Folgendes umfasst:
Erhalten (306) eines oder mehrerer Bilder, die durch die Bildaufnahmevorrichtung (10) erfasst werden,
Durchführen (307) des Bildanalysealgorithmus (500) an dem einen oder den mehreren erhaltenen Bildern, um neue Szeneneigenschaften zu bestimmen, und
Angleichen (308) der Szenensegmentierungskarte, um die neuen Szeneneigenschaften darzustellen, durch Ersetzen aktueller Szeneneigenschaften durch die neuen Szeneneigenschaften, durch Hinzufügen der neuen Szeneneigenschaften, um die Szenensegmentierungskarte zu erweitern, oder durch Schlussfolgern, dass die aktuellen Szeneneigenschaften die gleichen wie die neuen Szeneneigenschaften sind,
sobald der neue Fokuswert um nicht mehr als die Auslöseschwelle von dem gespeicherten Fokuswert abweicht, Beibehalten (309) der Szenensegmentierungskarte.

2. Verfahren nach Anspruch 1, wobei die Szenensegmentierungskarte Szeneneigenschaften angibt, die Tiefenwerte umfassen.

3. Verfahren nach einem der Ansprüche 1-2, wobei die Szenensegmentierungskarte Szeneneigenschaften angibt, die Objektklassen und Tiefenwerte umfassen, und wobei der Segmentierungsaktualisierungsprozess Folgendes umfasst:
Erhalten eines oder mehrerer Bilder, die durch die Bildaufnahmevorrichtung (10) erfasst werden,
Durchführen eines ersten Teils (502) des Bildanalysealgorithmus (500) an dem einen oder den mehreren erhaltenen Bildern, um neue Objektklassen für Objektbereiche zu bestimmen,
Vergleichen der neuen Objektklassen mit aktuellen Objektklassen für die Objektbereiche,
sobald sich eine oder mehrere neue Objektklassen von den aktuellen Objektklassen unterscheiden, Durchführen eines zweiten Teils (504) des Bildanalysealgorithmus (500) an dem einen oder den mehreren erhaltenen Bildern, um neue Tiefenwerte für die Objektbereiche der verschiedenen neuen Objektklassen zu bestimmen, und
Angleichen der Szenensegmentierungskarte an die neuen Objektklassen und jegliche neue Tiefenwerte für die Objektbereiche.

4. Verfahren nach einem der Ansprüche 1-3, wobei der Bildanalysealgorithmus (500) durch ein oder mehrere neuronale Netzwerke implementiert wird, die zum Zweck des Detektierens von Szeneneigenschaften in Bildern trainiert sind.

5. Verfahren nach einem der Ansprüche 1-4, das ferner ein Bestimmen (310), dass der neue Fokuswert für mehrere aufeinanderfolgende Bilder beibehalten wird, umfasst.

6. Verfahren nach Anspruch 5, wobei die mehreren aufeinander folgenden Bildrahmen durch die Bildaufnahmevorrichtung (10) erfasst werden, wenn sie sich in der gleichen Position befindet.

7. Nichttransitorisches computerlesbares Speichermedium mit darauf gespeicherten Anweisungen zum Implementieren des Verfahrens nach einem der Ansprüche 1-6, wenn sie auf einer Vorrichtung mit Verarbeitungsfähigkeiten ausgeführt werden.

8. Verarbeitungsvorrichtung (46) zum Bereitstellen einer Szenensegmentierungskarte für ein gesamtes Sichtfeld (12) einer Bildaufnahmevorrichtung (10), wobei die Verarbeitungsvorrichtung (46) zu Folgendem ausgelegt ist:
Erhalten (301) einer Szenensegmentierungskarte für das gesamte Sichtfeld (12), die durch Durchführen eines Bildanalysealgorithmus (500) an Bildern bestimmt wird, die durch die Bilderfassungsvorrichtung (10) erfasst werden, wobei die Szenensegmentierungskarte Szeneneigenschaften statischer Objekte in Objektbereichen in dem gesamten Sichtfeld (12) angibt,
Empfangen (302) einer Angabe, dass ein neuer Fokuswert für die Bildaufnahmevorrichtung (10) zum Erfassen von Bildern eines aktuellen Sichtfelds (14) eingestellt wurde, wobei das aktuelle Sichtfeld (14) kleiner oder gleich dem gesamten Sichtfeld (12) ist, wobei der neue Fokuswert eine Einstellung der Bildaufnahmevorrichtung (10) angibt, um einen bestimmten Fokus zu erreichen,
Vergleichen (303) des neuen Fokuswerts mit einem gespeicherten Fokuswert, der einem Fokusbereich (22) in dem aktuellen Sichtfeld (14) zugeordnet ist, wobei der gespeicherte Fokuswert eine Einstellung der Bildaufnahmevorrichtung (10) angibt, um einen Fokus zu erreichen, der zuvor zum Erfassen von Bildern eines Sichtfelds verwendet wurde, das das aktuelle Sichtfeld (14) zumindest teilweise überlappt,
sobald der neue Fokuswert von dem gespeicherten Fokuswert um mehr als eine Auslöseschwelle abweicht, Auslösen eines Segmentierungsaktualisierungsprozesses (46), wobei die Verarbeitungsvorrichtung ferner zu Folgendem ausgelegt ist:
Erhalten (306) eines oder mehrerer Bilder, die durch die Bildaufnahmevorrichtung erfasst werden,
Durchführen (307) des Bildanalysealgorithmus (500) an dem einen oder den mehreren erhaltenen Bildern, um neue Szeneneigenschaften zu bestimmen, und
Angleichen (308) der Szenensegmentierungskarte, um die neuen Szeneneigenschaften darzustellen, durch Ersetzen aktueller Szeneneigenschaften durch die neuen Szeneneigenschaften, durch Hinzufügen der neuen Szeneneigenschaften, um die Szenensegmentierungskarte zu erweitern, oder durch Schlussfolgern, dass die aktuellen Szeneneigenschaften die gleichen wie die neuen Szeneneigenschaften sind,
sobald der neue Fokuswert um nicht mehr als die Auslöseschwelle von dem gespeicherten Fokuswert abweicht, Beibehalten (309) der Szenensegmentierungskarte.

9. Verarbeitungsvorrichtung (46) nach Anspruch 8, die ferner dazu ausgelegt ist, zu bestimmen (310), dass der neue Fokuswert für mehrere aufeinanderfolgende Bilder beibehalten wird.

10. Verarbeitungsvorrichtung (46) nach Anspruch 9, wobei die mehreren aufeinander folgenden Bildrahmen durch die Bildaufnahmevorrichtung (10) erfasst werden, wenn sie sich in der gleichen Position befindet.

11. Bildaufnahmevorrichtung (10), die die Verarbeitungsvorrichtung (46) nach einem der Ansprüche 8-10 umfasst.

12. Bildaufnahmevorrichtung (10) nach Anspruch 11, die mit Bewegungsfähigkeiten ausgelegt ist.

## Revendications

1. Procédé de fourniture d'une carte de segmentation de scène pour un champ de vision total d'un dispositif (10) de capture d'images, le procédé comprenant :
l'obtention (301) d'une carte de segmentation de scène pour le champ de vision total (12) qui est déterminée en exécutant un algorithme (500) d'analyse d'images sur des images acquises par le dispositif (10) de capture d'images, la carte de segmentation de scène indiquant les caractéristiques de scène d'objets statiques dans des zones d'objets dans le champ de vision total (12),
la réception (302) d'une indication selon laquelle une nouvelle valeur de mise au point a été réglée pour le dispositif (10) de capture d'images afin d'acquérir des images d'un champ de vision actuel (14), le champ de vision actuel (14) étant inférieur ou égal au champ de vision total (12), la nouvelle valeur de mise au point indiquant un réglage du dispositif (10) de capture d'images pour réaliser une mise au point particulière,
la comparaison (303) de la nouvelle valeur de mise au point avec une valeur de mise au point stockée associée à une région (22) de mise au point dans le champ de vision actuel (14), la valeur de mise au point stockée indiquant un réglage du dispositif (10) de capture d'images pour réaliser une mise au point précédemment utilisée pour acquérir des images d'un champ de vision qui chevauche au moins partiellement le champ de vision actuel (14),
lorsque la nouvelle valeur de mise au point s'écarte de la valeur de mise au point stockée de plus d'un seuil de déclenchement, le déclenchement (305) d'un processus de mise à jour de segmentation comprenant :
l'obtention (306) d'une ou de plusieurs images acquises par le dispositif (10) de capture d'images,
l'exécution (307) de l'algorithme (500) d'analyse d'images sur l'image ou les images obtenues pour déterminer de nouvelles caractéristiques de scène, et
l'alignement (308) de la carte de segmentation de scène pour représenter les nouvelles caractéristiques de scène, en remplaçant les caractéristiques de scène actuelles par les nouvelles caractéristiques de scène, en ajoutant les nouvelles caractéristiques de scène pour étendre la carte de segmentation de scène, ou en concluant que les caractéristiques de scène actuelles sont les mêmes que les nouvelles caractéristiques de scène
lorsque la nouvelle valeur de mise au point ne s'écarte pas de la valeur de mise au point stockée de plus que le seuil de déclenchement, le maintien (309) de la carte de segmentation de scène.

2. Procédé selon la revendication 1, la carte de segmentation de scène indiquant des caractéristiques de scène comprenant des valeurs de profondeur.

3. Procédé selon l'une quelconque des revendications 1 à 2, la carte de segmentation de scène indiquant des caractéristiques de scène comprenant des classes d'objets et des valeurs de profondeur, et le processus de mise à jour de segmentation comprenant :
l'obtention d'une ou de plusieurs images acquises par le dispositif (10) de capture d'images,
l'exécution d'une première partie (502) de l'algorithme (500) d'analyse d'images sur l'image ou les images obtenues pour déterminer de nouvelles classes d'objets pour des zones d'objets,
la comparaison des nouvelles classes d'objets avec les classes d'objets actuelles pour les zones d'objets,
lorsqu'une ou plusieurs nouvelles classes d'objets sont différentes des classes d'objets actuelles, l'exécution d'une seconde partie (504) de l'algorithme (500) d'analyse d'images sur l'image ou les images obtenues afin de déterminer de nouvelles valeurs de profondeur pour les zones d'objets des nouvelles classes d'objets différentes, et
l'alignement de la carte de segmentation de scène sur les nouvelles classes d'objets et d'éventuelles nouvelles valeurs de profondeur pour les zones d'objets.

4. Procédé selon l'une quelconque des revendications 1 à 3, l'algorithme (500) d'analyse d'images étant mis en œuvre par un ou plusieurs réseaux neuronaux entraînés dans le but de détecter des caractéristiques de scène dans des images.

5. Procédé selon l'une quelconque des revendications 1 à 4, comprenant en outre la détermination (310) du fait que la nouvelle valeur de mise au point est maintenue pour une pluralité d'images consécutives.

6. Procédé selon la revendication 5, la pluralité de trames d'image consécutives étant acquise par le dispositif (10) de capture d'images lorsqu'il est dans une même position.

7. Support de stockage non transitoire lisible par ordinateur sur lequel sont stockées des instructions pour mettre en œuvre le procédé selon l'une quelconque des revendications 1 à 6 lorsqu'il est exécuté sur un dispositif ayant des capacités de traitement.

8. Dispositif (46) de traitement pour fournir une carte de segmentation de scène pour un champ de vision total (12) d'un dispositif (10) de capture d'images, le dispositif (46) de traitement étant agencé pour :
obtenir (301) une carte de segmentation de scène pour le champ de vision total (12) qui est déterminée en exécutant un algorithme (500) d'analyse d'images sur des images acquises par le dispositif (10) de capture d'images, la carte de segmentation de scène indiquant des caractéristiques de scène d'objets statiques dans des zones d'objets dans le champ de vision total (12),
recevoir (302) une indication selon laquelle une nouvelle valeur de mise au point a été réglée pour le dispositif (10) de capture d'images afin d'acquérir des images d'un champ de vision actuel (14), le champ de vision actuel (14) étant inférieur ou égal au champ de vision total (12), la nouvelle valeur de mise au point indiquant un réglage du dispositif (10) de capture d'images pour réaliser une mise au point particulière,
comparer (303) la nouvelle valeur de mise au point avec une valeur de mise au point stockée associée à une région (22) de mise au point dans le champ de vision actuel (14), la valeur de mise au point stockée indiquant un réglage du dispositif (10) de capture d'images pour réaliser une mise au point précédemment utilisée pour acquérir des images d'un champ de vision qui chevauche au moins partiellement le champ de vision actuel (14),
lorsque la nouvelle valeur de mise au point s'écarte de la valeur de mise au point stockée de plus d'un seuil de déclenchement, déclencher un processus de mise à jour de segmentation, le dispositif (46) de traitement étant en outre agencé pour :
obtenir (306) une ou plusieurs images acquises par le dispositif de capture d'images,
exécuter (307) l'algorithme (500) d'analyse d'images sur l'image ou les images obtenues afin de déterminer de nouvelles caractéristiques de scène, et
aligner (308) la carte de segmentation de scène pour représenter les nouvelles caractéristiques de scène, en remplaçant les caractéristiques de scène actuelles par les nouvelles caractéristiques de scène, en ajoutant les nouvelles caractéristiques de scène pour étendre la carte de segmentation de scène, ou en concluant que les caractéristiques de scène actuelles sont les mêmes que les nouvelles caractéristiques de scène ;
lorsque la nouvelle valeur de mise au point ne s'écarte pas de la valeur de mise au point stockée de plus que le seuil de déclenchement, maintenir (309) la carte de segmentation de scène.

9. Dispositif (46) de traitement selon la revendication 8, celui-ci étant en outre agencé pour déterminer (310) que la nouvelle valeur de mise au point est maintenue pour une pluralité d'images consécutives.

10. Dispositif (46) de traitement selon la revendication 9, la pluralité de trames d'image consécutives étant acquise par le dispositif (10) de capture d'images lorsqu'il est dans une même position.

11. Dispositif (10) de capture d'images comprenant le dispositif (46) de traitement selon l'une quelconque des revendications 8 à 10.

12. Dispositif (10) de capture d'images selon la revendication 11, agencé avec des capacités de mouvement.
